# EUROPÄISCHE PATENTSCHRIFT

(11) **EP 2 382 702 B1**
(45) Veröffentlichungstag und Bekanntmachung des Hinweises auf die Patenterteilung: **03.10.2018**
(21) Anmeldenummer: 10706132.7
(22) Anmeldetag: 22.01.2010
(51) Int. Cl.: H02K 23/18, H02K 5/173, H02K 7/14, H02K 9/04, H02K 9/22, H02K 11/28, H02K 11/33, H02K 23/66, H02K 5/14

(54) **VERSTELLEINRICHTUNG FÜR EINEN ELEKTROMOTOR**
ADJUSTING DEVICE FOR AN ELECTRIC MOTOR
DISPOSITIF DE RÉGLAGE POUR UN MOTEUR ÉLECTRIQUE

(30) Priorität: 24.01.2009 DE 102009006067; 24.01.2009 DE 102009006068
(43) Veröffentlichungstag der Anmeldung: 02.11.2011
(73) Patentinhaber: Marquardt GmbH, 78604 Rietheim-Weilheim (DE)
(72) Erfinder: FUCHS, Andreas, CH-3011 Bern (CH); FIEDERER, Klaus, 78589 Dürbheim (DE); GIRSBERGER, Lars, 8213 Neunkirch (CH); VILLANOVA, Emiliano, 8213 Neunkirch (CH)
(74) Vertreter: Otten, Roth, Dobler & Partner mbB Patentanwälte
(86) Internationale Anmeldenummer: PCT/DE2010/000060
(87) Internationale Veröffentlichungsnummer: WO 2010/083814

(56) Entgegenhaltungen:
- EP-A1- 0 235 735
- EP-A2- 0 271 714
- EP-A2- 1 447 900
- EP-A2- 1 742 332
- WO-A1-2005/078907
- DE-A1- 19 736 300
- DE-A1- 19 938 342
- US-A- 3 440 465
- US-A- 6 124 652

## Beschreibung

Die Erfindung betrifft eine Vorrichtung zur Drehrichtungsumkehr und/oder zur Verstellung der Kohlebürsten für einen reversiblen Elektromotor nach dem Oberbegriff des Patentanspruchs 1.

Solche Vorrichtungen, insbesondere in der Art eines Stellrings, werden in Elektrowerkzeugen, die mittels Wechselstrom (AC) oder Gleichstrom (DC) betrieben werden, verwendet, Diese Elektrowerkzeuge können mit einer Elektroniksteuerung versehen sein. Bei dem Elektromotor für das Elektrohandwerkzeug kann es sich um einen bürstenlosen (EC-)Motor handeln.

Es ist aus der EP 0 778 655 A2 sowie aus der EP 1 742 332 A2 eine Vorrichtung zur Verstellung der Kohlebürsten in der Art eines Stellrings für einen reversiblen Elektromotor mit einem Sockel und mit einem verschwenkbar am Sockel gelagerten Träger bekannt. Am Träger sind Bürstenhalter für die auf dem Kollektor des Elektromotors schleifenden Kohlebürsten angeordnet. Der Stellring dient damit als Halterung für die Kohlebürsten des mechanischen Stromwenders oder Kommutators des Elektromotors. Durch Drehen des Stellrings erreicht man den Wechsel der Drehrichtung der elektrischen Maschine. Weiter erlaubt der Stellring eine optimale Kommutierung beim Links- und/oder Rechtslauf des Elektromotors, wodurch eine Reduzierung des Bürstenfeuers, der Funkstörung und eine längere Lebensdauer der Kohlebürsten erzielt wird.

Bei Elektrowerkzeugen ist häufig der Elektromotor mittels einer Leistungselektronik, wie einer Pulsweitensteuerung, einer Phasenanschnittsteuerung, einer Phasenabschnittsteuerung o. dgl., ansteuerbar. Die Leistungselektronik kann auf einer Leiterplatte als separates Bauteil an zweckmäßiger Stelle im Gehäuse des Elektrowerkzeugs, beispielsweise im Handgriff des Elektrowerkzeugs, angeordnet sein. Es sind auch beispielsweise im Handgriff befindliche elektrische Schalter für Elektrowerkzeuge bekannt, bei denen die Leistungselektronik im Schaltergehäuse angeordnet ist. Da die Kommutierung mit Vorteil direkt auf dem Elektromotor erfolgt, sind dank dem Lüfterstrom des Motors die Bürsten und der Kollektor gut gekühlt. Die Leistungsstellung hingegen findet in der Regel im Handgriff oder im Schaltergehäuse statt. Wegen geringem oder fehlendem Luftstrom ist hier die Entwärmung schwierig.

Weiter ist aus der EP 0 271 714 A2 eine Vorichtung zur Verstellung der Kohlebürsten sowie zur Drehrichtungsumkehr für einen reversiblen Elektromotor bekannt, welche eine schwenkbar am Gehäuse des Elektromotors angeordnete Bürstenhalterplatte aufweist. Auf der Bürstenhalterplatte sind Funkentstördrosseln angeordnet. Desweiteren können Teile einer Leistungselektronik, wie ein Triac, auf der Bürstenhalterplatte angeordnet sein.

Trägerelemente, auf denen elektrische und/oder elektronische Bauteile sowie Bürstenhalterungen angeordnet sind, für Elektromotoren sind in der EP 1 447 900 A2, DE 197 36 300 A1 und WO 2005/078907 A1 beschrieben. Ein weiteres Trägerelement mit einem Rotorlager für einen Elektromotor und Kontaktverbindungen zu weiteren Funktionsgruppen ist in der EP 0 235 735 A1 gezeigt. Schließlich ist in der DE 199 38 342 A1 ein Bürstenträger mit einer Kontaktanordnung zu weiteren Bestandteilen des Elektromotors beschrieben. Diese Trägerelemente sind jedoch nichtbeweglich und dienen lediglich der Halterung der Bauteile. Es handelt sich bei diesen Trägerelementen somit nicht um solche, die zur Drehrichtungsumkehr und/oder zur Verstellung der Kohlebürsten geeignet sind.

Der Erfindung liegt die Aufgabe zugrunde, die Vorrichtung zur Drehrichtungsumkehr und/oder zur Verstellung der Kohlebürsten so weiterzuentwickeln, daß die Entwärmung für die Leistungselektronik weiter verbessert ist. Insbesondere ist es Aufgabe, das Antriebssystem von Elektrowerkzeugen optimal zu strukturieren, um minimale Kosten, und zwar Teilekosten, Beschaffungs- und/oder Logistikkosten, Montagekosten o. dgl., eine optimale Entwärmung sowie eine maximale Leistung zu erreichen.
Diese Aufgabe wird bei einer gattungsgemäßen Vorrichtung zur Drehrichtungsumkehr und/oder zur Verstellung der Kohlebürsten durch die kennzeichnenden Merkmale des Anspruchs 1 gelöst.
Bei der erfindungsgemäßen Vorrichtung zur Drehrichtungsumkehr und/oder zur Verstellung der Kohlebürsten ist die Leistungselektronik nicht nur teilweise am Sockel und/oder am Träger angeordnet sondern die gesamte Leistungselektronik ist am Sockel und/oder am Träger des Stellrings befindlich. Desweiteren ist eine Sensoren, wie Stromsensoren und/oder Sensoren für die Rotorposition des Elektromotors, aufweisende Signalverarbeitungselektronik am Sockel und/oder am Träger angeordnet. Anders als bei dem Stand der Technik, wo lediglich Teile der Leistungselektronik ein Bestandteil des Stellrings sind, schafft die Erfindung somit eine Einheit für das Kommutieren und/oder Leistungsstellen von elektrischen Motoren in Elektrowerkzeugen, also einen Leistungsstellring. Damit ist auch die Aufgabe gelöst, Kommutierung und/oder Leistungsstellen sowie eventuell weitere Funktionen räumlich zu vereinen. Der Grund, warum Kommutierung und/oder Leistungsstellen räumlich vereint sein sollten, ist wie erwähnt, die verbesserte Entwärmung für das Leistungsteil. Außerdem erlaubt die Aufteilung des elektrischen Systems in Module, die entweder Leistungs- und/oder SignalStröme führen, eine erhebliche Vereinfachung der Verkabelung und die räumlich optimale Platzierung der Funktionen. Eine klare Trennung zwischen Leitungen, die Signalströme und solchen die Leistungsströme führen, wird dadurch ermöglicht. Weitere Ausgestaltungen der Erfindung sind Gegenstand der Unteransprüche.

In einer einfachen Ausgestaltung befinden sich die Schaltkontakte, die in der Art von Kontaktflügeln ausgestaltet sein können, an den Bürstenhaltern, die mit den Kohlebürsten in elektrischer Verbindung stehen. Die Festkontakte, die mit den Feldwicklungen des Elektromotors in elektrischer Verbindung stehen, sind am Sockel angeordnet. Die Festkontakte wirken mit den Schaltkontakten als Gegenkontakte in einer wechselweisen Kontaktierung der Kohlebürsten zur Drehrichtungsumkehr des Elektromotors bei Verschwenkung des Trägers zusammen.

In an sich üblicher Weise kann die Leistungselektronik wenigstens einen Leistungshalbleiter, welcher die Ströme in den Motorwindungen des Elektromotors schaltet, beispielsweise einen Triac, einen Thyristor, einen MosFET, eine Leistungsdiode, eine H-Brücke o. dgl., aufweisen. Um einen besonderen Schutz vor der Einwirkung von Schadstoffen zu erreichen, kann die Signalverarbeitungselektronik und/oder die Leistungselektronik gekapselt, vergossen o. dgl. sein.

In einer weiteren Ausgestaltung kann der Sockel und/oder der Träger Elemente des Elektromotors umfassen. Insbesondere kann eine Lagerschale für ein Kugellager der Rotorwelle des Elektromotors am Sockel und/oder am Träger angeordnet sein. Es kann der Sockel und/oder der Träger ein Teil des Gehäuses oder der tragenden Struktur des Elektrohandwerkzeugs bilden. Man erreicht dadurch eine Integration von Bauteilen, wodurch eine Kompaktifizierung sowie auch eine Kostenreduzierung erzielt wird.

Zur weiteren Verbesserung der Entwärmung können Leitflossen zur Führung eines, insbesondere für die Kühlung des Elektromotors dienenden Kühlluftstroms, am Sockel und/oder am Träger angeordnet sein. Dadurch kühlt der Kühlluftstrom für den Elektromotor gleichzeitig die Leistungselektronik. Ebenso kann ein Kühlkörper am Sockel und/oder am Träger zur Kühlung der Leistungselektronik angeordnet sein. Insbesondere ist der Kühlkörper am Leistungshalbleiter befindlich oder steht zumindest in thermischer Verbindung mit dem Leistungshalbleiter. Zweckmäßigerweise sind die metallischen Teile der Bürstenhalter für die Kohlebürsten als Wärme leitende und/oder Wärme an die Luft abgebende Teile ausgebildet. Schließlich können auch die Pole der Leistungshalbleiter in der Leistungselektronik direkt auf die Bürstenhalter für die Kohlebürsten elektrisch und/oder wärmetechnisch kontaktieren, um eine weitere Verbesserung der Wärmeabfuhr zu erreichen.

Üblicherweise ist der Sockel und/oder der Träger aus Kunststoff mittels Spritzgießen hergestellt. Die tragende Struktur des Sockels und/oder des Trägers kann jedoch statt aus Kunststoff auch aus Metall bestehen. Dadurch dient die tragende Struktur gleichzeitig der Wärmespreizung, der Wärmeleitung, der Wärmeabgabe o. dgl. an die Luft. Anstelle von Luft kann auch ein anderes Fluid in einer Art Kühlkreislauf zum Abtransport der Wärme dienen, wobei es sich dann zweckmäßigerweise um ein Fluid mit einer größeren Wärmekapazität handelt. Es kann sich weiterhin anbieten, daß der Sockel und/oder der Träger räumlich derart strukturiert ist, daß eine Abschirmung zur Verbesserung der elektromagnetischen Verträglichkeit (EMV) und/oder zur Verhinderung eines Wärmeflusses von den Kohlebürsten auf die wärmeempfindlichen Teile, beispielsweise der Leistungselektronik, ermöglicht ist.

Um eine weitere Steigerung der Wärmeabfuhr zu erreichen, kann ein Lüfter zur Erzeugung eines Kühlluftstroms am Sockel und/oder am Träger zur Kühlung der Leistungselektronik angeordnet sein. Falls gewünscht, kann ein solcher Lüfter nur den Leistungsstellring kühlen, oder dann auch zusätzlich den Elektromotor im Blockierfall. Zwecks guter Anpassung an die jeweils abzuführende Wärme läßt sich die Lüfterleistung steuern und/oder regeln.

In einer kompakten Ausgestaltung ist am Sockel und/oder am Träger ein Stecker oder ein sonstiger Anschluß für den Netzanschluß, für den Anschluß zur Leistungselektronik, für den mechanisch und/oder elektrisch kontaktierenden Anschluß zu einem Stellelement mit Potentiometer o. dgl. angeordnet. Der Leistungsstellring kann eine Anschlußmöglichkeit aufweisen, und zwar beispielsweise auf der dem Handgriff zugeordneten Seite, mittels welcher ein Bedienelement mechanisch und elektrisch kontaktiert werden kann. Bei diesem Bedienelement kann es sich um einen sogenannten Potischalter handeln, um eine Drehzahlsteuerung für den Elektromotor des Elektrowerkzeugs durch den Benutzer zu ermöglichen. Desweiteren kann es sich auch anbieten, am Sockel und/oder am Träger ein Drehpotentiometer als Stellglied für die Leistungselektronik anzuordnen.

Für eine besonders bevorzugte Ausgestaltung ist noch nachfolgendes festzustellen. Die Erfindung stellt eine Einheit bereit, welche einerseits die Funktionalität eines Stellrings, d.h. eines drehbaren Bürstenhalters, aufweist, andererseits die Funktionalität eines Leistungsstellers. Im Folgenden wird diese Einheit auch als Leistungsstellring bezeichnet. Unter einem Leistungssteller versteht man ein Modul welches die Ströme in den Motorwindungen schaltet beziehungsweise steuert. Beispiele hierfür sind Triac, Thyristor, MosFET, Leistungsdioden sowie Kombinationen derselben oder Leistungsendstufen für ein 3-Phasen-System, wie beispielsweise drei H-Brücken. Leistungssteller können Sensoren aufweisen, wie beispielsweise Stromsensoren oder Sensoren für die Rotorposition.
Für bevorzugte Ausführungen kann weiterhin folgendes festgestellt werden. Die Grundfunktionen im elektrischen System der Maschinen im Rahmen des Gesamtsystems "Elektrowerkzeug" sind:
- das Mensch-Maschinen-Interface, üblicherweise ein gefederter Drücker, der auf den Schleifer eines Linearpotentiometer wirkt,
- das Ein- und/oder Aus-Schalten,
- die Drehrichtungsumkehr,
- der Kontroll-Teil zum Messen, Steuern, Regeln (MSR) oder auch Teilmengen und/oder Kombinationen davon,
- das Leistung stellen, also der Leistungssteller oder die Endstufe,
- das Kommutieren der elektrischen Maschine.
Im Fall von Wechselstrom(AC)-Maschinen oder bürstenbehafteten Gleichstrom(DC)-Maschinen geschieht das Kommutieren durch Stellringe, welche die Bürsten auf den Kollektor des Maschinenrotors drücken. Das Mensch-Maschinen-Interface ist auf seine minimale Funktion, d.h. auf das Ablesen des Willen des Gerätebenutzers, reduziert. Es ist als Poti-Schalter ausgeführt, welcher nur Signalströme schaltet oder moduliert. Der Kontroll-Teil und die Leistungsstufe sowie der Stellring bilden eine Einheit, und zwar den Leistungsstellring. Die Leistung tragenden Kabel führen von der Energiequelle, dem Netz oder einem Akku-Pack, direkt zum Leistungsstellring. Der Kontroll-Teil besteht aus einer Elektronik, welche als Ring oder als flexibler Print ausgeführt ist. Dies erlaubt die Integration in den Leistungsstellring.

Der Leistungsstellring besitzt zwei Schaltstellungen, und zwar jeweils eine Schaltstellung für den Rechtslauf sowie für den Linkslauf des Elektromotors. Jedoch kann der Leistungsstellring auch mehr als zwei Schaltstellungen aufweisen, beispielsweise eine dritte Schaltstellung, in welcher das Elektrowerkzeug im Zustand "Aus" ist. Eine bevorzugte Ausführung hierfür sieht nachfolgendes vor. Wird der Drücker beziehungsweise Trigger als manuelle Handhabe durch den Benutzer gedrückt, so schnappt der Leistungsstellring aus einer Zwangs-Mittelstellung in die Stellung Rechtslauf ("CW=Clockwise" / Uhrzeigersinn) oder Linkslauf ("CCW=Counterclockwise" / Gegenuhrzeigersinn) für den Elektromotor, und zwar je nach Vorwahl durch die für die Finger des Benutzers greifbare Handhabe am Leistungsstellring.
In Weiterbildungen kann der Leistungsstellring auch den Kontroll-Teil eines Schalters umfassen, und zwar derjenige, der für MSR zuständig ist. Die signalverarbeitende Elektronik und die Leistungs-Elektronik können gekapselt oder vergossen sein. Die Einheit kann zusätzlich Elemente der elektrischen Maschine umfassen, beispielsweise kann sie eine Lagerschale für ein Kugellager der Rotorwelle enthalten. Die Einheit kann ein Teil des Gehäuses oder der tragenden Struktur der elektrischen Maschine darstellen. Im Falle von EC-Maschinen für Netz- oder Batterie-Spannung enthält die Einheit Mikrocontroller oder Logikschaltungen sowie Leistungshalbleiter und Sensoren für die Erfassung der Rotorposition. Der Leistungsstellring kann Leitflossen zur Führung des Kühlluftstroms umfassen. Der Leistungsstellring kann einen Lüfter aufweisen. Dieser kühlt nur den Leistungsstellring oder dann auch den Motor im Blockierfall. Die Lüfterleistung kann gesteuert oder geregelt sein. Die Einheit kann einen Stecker enthalten. Der Leistungsstellring kann einen Kühlkörper aufweisen. Die metallischen Teile der Kohlebürstenhalter können als Wärme leitende und Wärme an die Luft abgebende Teile ausgebildet sein. Die tragende Struktur des Leistungsstellrings kann metallisch sein und dient gleichzeitig der Wärmespreizung oder Wärmeleitung oder Wärmeabgabe an die Luft oder ein anderes Fluid. Pole der Leistungshalbleiter können direkt auf die Halter der Kohlebürsten elektrisch oder auch wärmetechnisch kontaktieren. Der Leistungsstellring kann in sich räumlich so strukturiert sein, daß beispielsweise eine Abschirmung zwecks Verbesserung der EMV möglich ist, oder daß beispielsweise der Wärmefluß von den Bürsten auf die wärmeempfindlicheren Teile, beispielsweise der Kontroll-Stufe, nicht erfolgen kann. Der Leistungsstellring kann, beispielsweise auf der Seite des Handgriffs, eine Anschlußmöglichkeit aufweisen, mittels welcher ein Bedienelement, wie ein Potischalter, mechanisch und elektrisch kontaktiert werden kann. Der Stellring kann die Funktion eines Drehpotentiometers haben.

Die mit der Erfindung erzielten Vorteile bestehen insbesondere darin, daß die die Leistung tragenden Stromleiter nicht mehr wie bisher durch das Schaltergehäuse sondern direkt zum Leistungsstellring im Motorgehäuse oder auf dem Motor führen. Der Verkabelungsaufwand minimiert sich, was sowohl zu einer Kosteneinsparung als auch einer einfacheren Montage führt. Der elektrische Wirkungsgrad steigt, und die Abwärme kann direkt in den Kühlluftstrom der elektrischen Maschine abgegeben werden. Die mit Hilfe der Erfindung erreichte bessere Entwärmung erlaubt auch den Einsatz preiswerterer Leistungshalbleiter. Es besteht zudem das Potential, dieselbe Grund-Struktur für AC-, DC- und/oder EC-Antriebe zu verwenden, da die leistungsführenden Unterbaugruppen sich in einer Linie mit dem Motor befinden und das Bedienelement im Handgriff nur Signalströme führt. Schließlich ergeben sich im Handgriff neue gestalterische Freiheiten durch den Entfall des Platzbedarfs für den Leistungssteller.

Als weitere durch die Erfindung erzielten Vorteile sind noch zu nennen:
- Die Leistungselektronik befindet sich im kühlenden Luftstrom. Dadurch sind Einsparungen am Kühlkörper oder am Leistungshalbleiter möglich. Alternativ ist auch eine Leistungserhöhung möglich.
- Die Drehrichtungsumkehr über einen mechanischen Stellring ist besser und kostengünstiger als eine vollelektronische Drehrichtungsumkehr.
- Das "Gasgebe"-Signal für die Drehzahl des Elektromotors ist über einen sehr einfachen Potisteller, lediglich mittels Steuerströmen ermöglicht. Die EIN/AUS-Funktion ist elektronisch ohne mechanischen Kontakt realisierbar. Dadurch sind schlankere Handgriffe möglich.
- Es ist eine sehr einfache Verdrahtung mittels Signalleitungen und Leitungen für den Leistungsstrom in der Maschine ermöglicht. Die Leistung wird nur dort geführt wo sie notwendig ist.
- Es kann ein "vollelektronischer Schalter" in einfacher Art und Weise realisiert werden.
Wie bereits erwähnt, können an den Bürstenhaltern sich Schaltkontakte in der Art von Kontaktflügeln, die mit den Kohlebürsten in elektrischer Verbindung stehen, befinden. Festkontakte, die mit den Feldwicklungen des Elektromotors in elektrischer Verbindung stehen, sind am Sockel angeordnet. Die Festkontakte wirken mit den Schaltkontakten als Gegenkontakte in einer wechselweisen Kontaktierung der Kohlebürsten zur Drehrichtungsumkehr des Elektromotors bei Verschwenkung des Trägers zusammen. Der Festkontakt besteht aus einem federnden Kontaktarm, welcher auf den nicht federnden Gegenkontakt des Schaltkontakts in einer Einfachkontaktierung eine Kraft ausübt. Es hat sich herausgestellt, daß eine solche Kontaktanordnung in manchen extremen Einsatzfällen des Elektrowerkzeugs nicht immer betriebssicher ist sowie einem gewissen, gegebenenfalls vorzeitigen Verschleiß unterworfen ist.

In Weiterbildungen der Vorrichtung zur Drehrichtungsumkehr und/oder zur Verstellung der Kohlebürsten ist der Festkontakt als U-förmig gebogener Kontaktarm ausgestaltet und es sind zwei Gegenkontakte als Schaltkontakte angeordnet, derart daß der Festkontakt beidseitig gegen die Gegenkontakte des Schaltkontakts eine Kraft ausübt.

Dies schafft somit eine Doppelkontaktierung für Stellringe und Schalter, wobei ein U-förmig gebogener, federnder Kontaktarm gegen zwei nicht federnde Gegenkontakte beidseitig eine Kraft ausübt. Damit wird auch unter extremen Belastungen eine hohe Kontakt- sowie Betriebssicherheit erzielt und die Lebensdauer der Vorrichtung weiter gesteigert. Weitere Ausgestaltungen der Erfindung sind Gegenstand der Unteransprüche. Der Bürstenhalter kann zweiteilig ausgestaltet sein. Zweckmäßigerweise besteht der Bürstenhalter aus einer Grundplatte aus Kupfer und einer Halterung aus Messing. In einer bevorzugten Ausbildung sind die Kontaktarme des Festkontakts federnd sowie die Gegenkontakte am Schaltkontakt feststehend, also nicht federnd, ausgestaltet. In einer anderen Ausbildung sind die Kontaktarme des Festkontakts feststehend, also nicht federnd, sowie die Gegenkontakte am Schaltkontakt federnd ausgestaltet. Dabei kann als federndes Element für den Gegenkontakt die Grundplatte des Bürstenhalters dienen. In einer weiteren Ausgestaltung ist der Festkontakt in der Art einer Kontaktbahn derart gebogen, daß zwei federnde Kontaktarme von außen her gegen die beiden Gegenkontakte eine Kraft ausüben. Um noch höhere Ströme schalten zu können, können längliche Kontaktnieten an den als Keilflächen ausgestalteten Kontaktarmen des Festkontakts angebracht sein. Damit kann dann auch sicher unter Last-Strom geschaltet werden. Zweckmäßigerweise sind die Gegenkontakte mit Kontaktnieten versehen. Weiter können zur Erhöhung der Lebensdauer die Kontakte beschichtet sein, beispielsweise mit einem Edelmetall.
Für bestimmte Ausführungen ist nachfolgendes festzustellen. Derartige Bürstenhaltersysteme mit Rechts-/Linkslaufumschaltung weisen auf:
- Kohlehalter, bestehend aus zwei Teilen, nämlich einer Grundplatte aus Kupfer und einer Halterung aus Messing.
- Kontaktbahn so gebogen, daß die federnden Kontaktarme von außen her statt von innen her gegen zwei Gegenkontakte eine Kraft ausüben.
- Kontaktbahn als nicht federndes Teil ausgebildet. Als federndes Element dient dann die Grundplatte.
- Längliche Kontaktnieten sind an den Keilflächen angebracht, damit auch unter Strom geschaltet werden kann. Der Gegenkontakt kann oder kann nicht mit Kontaktnieten versehen sein.
- Die Kontakte können beschichtet werden.

Die mit der Erfindung erzielten Vorteile bestehen insbesondere darin, daß die Kontaktierung im Stellring optimiert ist, insbesondere bezüglich der Toleranzempfindlichkeit, der Montagesicherheit, der Vibrationsfestigkeit, der Kontaktsicherheit, der Temperaturerhöhung sowie der Strombelastbarkeit. Wenn durch Vibrationen eine Kontaktierung unterbrochen wird, kann immer noch die zweite Kontaktstelle Strom führen, womit eine permanente Stromübertragung sichergestellt ist.

Weiter ergeben sich folgende Vorteile:
- Die Temperaturerhöhung unter Last ist geringer im Vergleich zur bisherigen Kontaktierung mit einem federnden Arm. Dies ergibt sich wegen der zwei parallelen und somit redundanten Kontaktübergänge.
- Erhöhte Kontaktsicherheit durch gegenseitige Abstützung unter Vibrationen sowie kleinerer Übergangswiderstand wie bisher.
- Es ist eine geringere Kontaktkraft als bisher möglich. Dadurch ergibt sich auch ein geringerer Abrieb an den Kontakten.
- Die geometrischen Maße, die die Kontaktkraft beeinflussen, sind in der Fertigung leichter einhaltbar und kontrollierbar.

Die Abhängigkeit und Beeinflussung der Kontaktkraft ergibt sich bei der bisherigen Lösung durch:
- Mehrere Biegungen an der Kontaktbahn.
- Aufnahme der Kontaktbahn im Sockel.
- Verzug im Sockel.
- Führung Sockel - Oberteil.
- Anschlag Sockel - Oberteil.
- Verzug Oberteil.
- Aufnahme Kohlehalter auf Sockel.
- Maßhaltigkeit Kohlehalter (Materialkonstanten) und Einschubtiefe.
Bei der erfindungsgemäßen Lösung hingegen wird die Kontaktkraft lediglich durch das Öffnungsmaß der Festkontakte, das Öffnungsmaß des U-Bügels der Kontaktbahn sowie durch die Einschubtiefe beeinflußt, womit die Toleranzunempfindlichkeit verbessert ist.

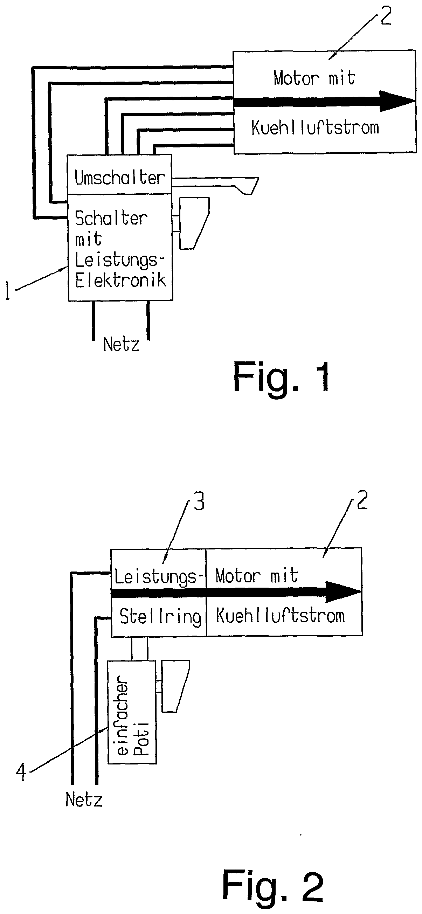

Eine Ausführung nach dem Stand der Technik, also mit konventionellem Rechts-/Links-Umschalter und ohne Stellring, ist in Fig. 1 dargestellt. Ein Ausführungsbeispiel der Erfindung mit verschiedenen Weiterbildungen und Ausgestaltungen ist in den Zeichnungen gemäß Fig. 2 ff. dargestellt und wird im folgenden näher beschrieben. Es zeigen
- Fig. 1: die Anordnung der Leistungselektronik in einem Elektrowerkzeug nach dem Stand der Technik in schematischer Art,
- Fig. 2: die erfindungsgemäße Anordnung der Leistungselektronik in einem Elektrowerkzeug als schematisches Blockschaltbild,
- Fig. 3: eine erfindungsgemäße Vorrichtung zur Verstellung der Kohlebürsten in perspektivischer Ansicht,
- Fig. 4: die Vorrichtung nach Fig. 3 in einer anderen perspektivischen Ansicht,
- Fig. 5: die Vorrichtung entsprechend Fig. 3, wobei einzelne Teile weggelassen sind,
- Fig. 6: die Vorrichtung entsprechend Fig. 4, wobei einzelne Teile weggelassen sind,
- Fig. 7: die Kontaktanordnung in der Vorrichtung entsprechend einer weiteren Ausführung und
- Fig. 8: die Kontaktanordnung in der Vorrichtung entsprechend einer noch weiteren Ausführung.

Wie in Fig. 1 zu sehen ist, ist bisher der Schalter 1 mit Leistungselektronik nicht im Luftstrom für den Elektromotor 2 befindlich. Es wird ein konventioneller Rechts-/Links(RL)-Umschalter verwendet. Dies erfordert große Kühlkörper, teure Bauteile, viele Leitungen u. dgl. sowie setzt enge Leistungsgrenzen. Gemäß der Fig. 2 ist bei der Erfindung die Leistungselektronik für das Elektrowerkzeug, wie für eine Bohrmaschine oder einen Schrauber, vom Schalter 4 in den mechanisch verstellbaren Kohlebürstenhalter und damit in den Stellring 3 zur Drehrichtungsumkehr verlagert. Dadurch befindet sich die Leistungselektronik im Kühlluftstrom für den Elektromotor 2. Somit sind höhere Leistungen und/oder billigere Bauteile möglich sowie weniger elektrische Leitungen erforderlich. Beispielsweise sind statt 8 leistungsführenden Leitungen nur noch 2 leistungsführende Leitungen plus 2 Signalleitungen erforderlich.

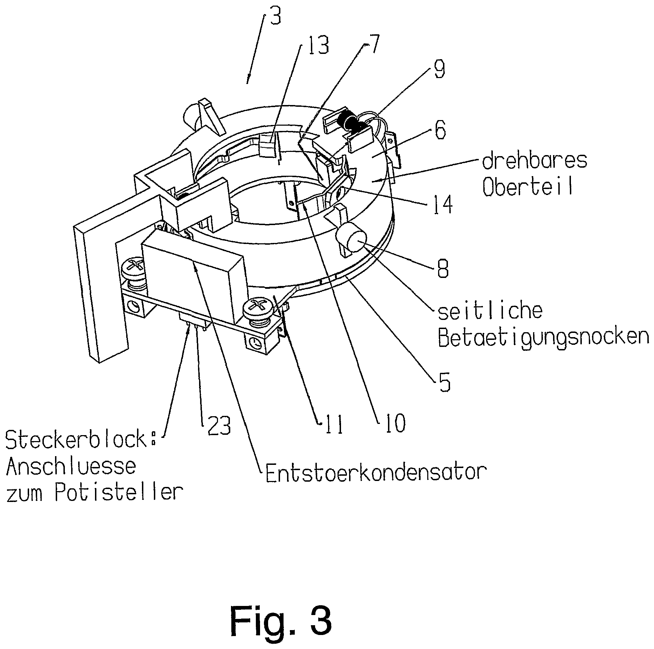

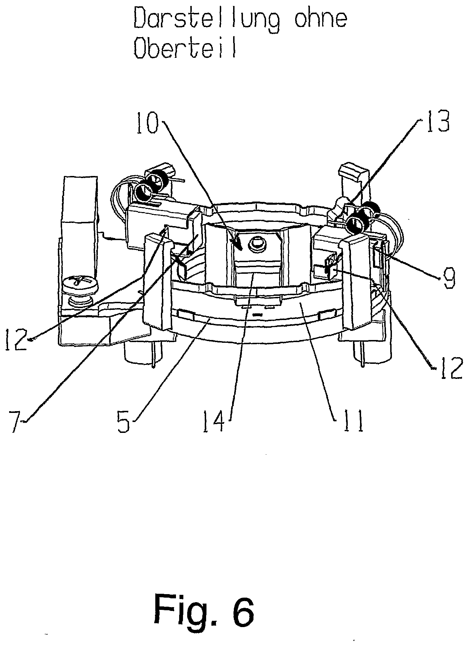

Wie man nun weiter anhand der Fig. 3 sieht, weist der Stellring 3 als Vorrichtung zur Verstellung der Kohlebürsten 7 für den reversiblen Elektromotor eines Elektrohandwerkzeugs einen Sockel 5 und einen verschwenkbar am Sockel 5 gelagerten Träger 6 auf. Am Träger 6, der mittels seitlicher Betätigungsnocken 8 verschwenkbar ist, sind Bürstenhalter 9 für die auf dem Kollektor des Elektromotors schleifenden Kohlebürsten 7 angeordnet. Der Elektromotor ist mittels einer Leistungselektronik 10, die in Fig. 6 zu sehen ist, und bei der es sich um eine Pulsweitensteuerung, eine Phasenanschnittsteuerung, eine Phasenabschnittsteuerung o. dgl. handelt, ansteuerbar. Die auf einer Leiterplatte 11 befindliche Leistungselektronik 10 ist am Sockel 5 angeordnet. Falls gewünscht, kann sich die Leistungselektronik 10 auch am Träger 6 befinden, was vorliegend jedoch nicht weiter gezeigt ist.

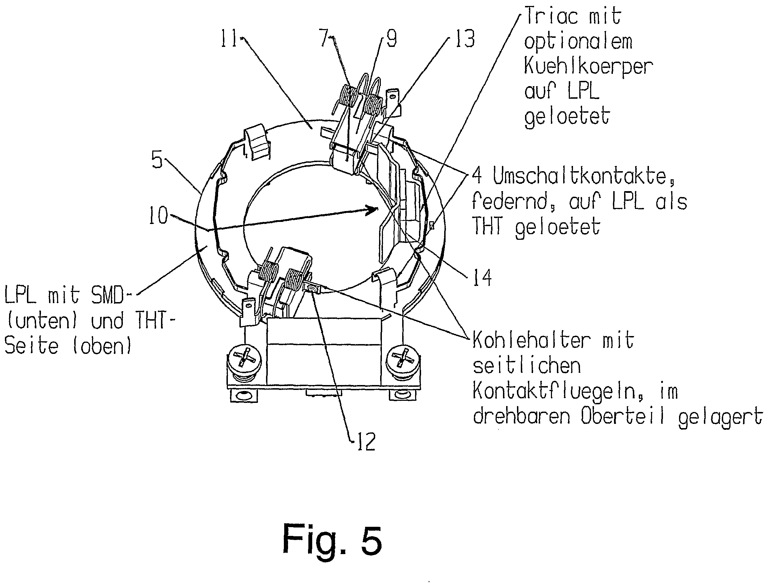

Wie in Fig. 5 zu sehen ist, befinden sich Schaltkontakte 12 in der Art von Kontaktflügeln an den Bürstenhaltern 9, die mit den Kohlebürsten 7 in elektrischer Verbindung stehen. Weiter sind Festkontakte 13, die mit den Feldwicklungen des Elektromotors in elektrischer Verbindung stehen, am Sockel 5 angeordnet, und zwar auf die Leiterplatte 11 aufgelötet. Die Festkontakte 13 wirken mit den Schaltkontakten 12 als Gegenkontakte in einer wechselweisen Kontaktierung der Kohlebürsten 7 zur Drehrichtungsumkehr des Elektromotors bei Verschwenkung des Trägers 6 zusammen. Im übrigen kann für einen bürstenlosen Elektromotor, bei dem die Kohlebürsten 7 entfallen, die beschriebene Vorrichtung als Drehrichtungsumschalter wirken, wobei wiederum die Leistungselektronik 10 am Sockel 5 und/oder am Träger 6 angeordnet ist.

Die Leistungselektronik 10 weist wenigstens einen Leistungshalbleiter 14 auf, welcher die Ströme in den Motorwindungen des Elektromotors schaltet beziehungsweise steuert. Beispielsweise kann es sich bei dem Leistungshalbleiter 14 um einen Triac, einen Thyristor, einen MosFET, eine Leistungsdiode, eine H-Brücke mit Leistungshalbleitern, Relais und/oder elektrischen Schaltern o. dgl. handeln. Eine nicht weiter gezeigte Signalverarbeitungselektronik, die Sensoren, wie Stromsensoren und/oder Sensoren für die Rotorposition des Elektromotors, aufweist, kann ebenfalls am Sockel 5 und/oder am Träger 6 angeordnet sein. Zweckmäßigerweise kann zum Schutz die Signalverarbeitungselektronik und/oder die Leistungselektronik 10 gekapselt oder vergossen sein.

In Weiterbildungen der Vorrichtung 3 zur Verstellung der Kohlebürsten 7, die im Einzelnen jedoch in den Figuren nicht näher dargestellt sind, kann der Sockel 5 und/oder der Träger 6 Elemente des Elektromotors umfassen, insbesondere eine Lagerschale für ein Kugellager der Rotorwelle des Elektromotors. Der Sockel 5 und/oder der Träger 6 können ein Teil des Gehäuses oder der tragenden Struktur des Elektrohandwerkzeugs bilden. Zweckmäßigerweise kann die tragende Struktur des Sockels 5 und/oder des Trägers 6 aus Metall bestehen, derart daß die tragende Struktur gleichzeitig der Wärmespreizung, der Wärmeleitung, der Wärmeabgabe o. dgl. an die Luft und/oder ein anderes Fluid dient. Weiter kann der Sockel 5 und/oder der Träger 6 räumlich derart strukturiert sein, daß eine Abschirmung zur Verbesserung der EMV oder die Verhinderung eines Wärmeflusses von den Kohlebürsten 7 auf die wärmeempfindlichen Teile, beispielsweise der Leistungselektronik 10, ermöglicht ist.

Es können Leitflossen zur Führung eines, insbesondere für die Kühlung des Elektromotors dienenden Kühlluftstroms am Sockel 5 und/oder am Träger 6 angeordnet sein, derart daß der Kühlluftstrom die Leistungselektronik 10 kühlt. Außerdem kann auch ein Kühlkörper am Sockel 5 und/oder am Träger 6 zur Kühlung der Leistungselektronik 10 angeordnet sein. Die metallischen Teile der Bürstenhalter 9 für die Kohlebürsten 7 können als Wärme leitende und/oder Wärme an die Luft abgebende Teile ausgebildet sein. Schließlich kann ein Lüfter zur Erzeugung eines Kühlluftstroms am Sockel 5 und/oder am Träger 6 zur Kühlung der Leistungselektronik 10 angeordnet sein, wobei der Lüfter den Leistungsstellring 3 oder dann auch den Elektromotor im Blockierfall kühlt. Die Lüfterleistung des Lüfters läßt sich hierfür steuern und/oder regeln. Darüberhinaus können die Pole der Leistungshalbleiter 14 in der Leistungselektronik 10 direkt auf die Bürstenhalter 9 für die Kohlebürsten 7 elektrisch und/oder wärmetechnisch kontaktieren.

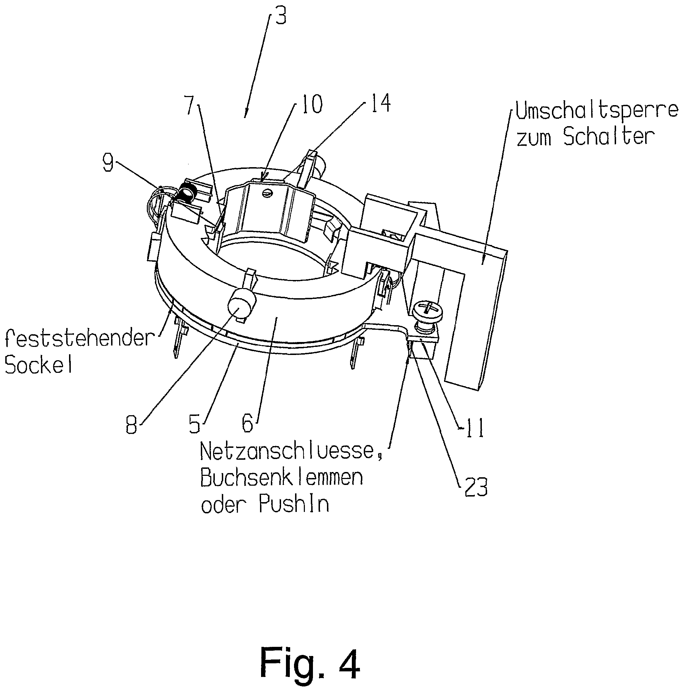

Am Sockel 5 ist gemäß Fig. 4 ein Stecker 23, beispielsweise mit Push-In-Klemmen oder Buchsen-Klemmen, für einen Netzanschluß angeordnet. Der Stecker 23 dient als Anschluß für die Spannungsversorgung zur Leistungselektronik 10. Desweiteren kann der Stecker 23 gemäß Fig. 3 auch für den mechanisch und/oder elektrisch kontaktierenden Anschluß zu einem Stellelement mit Potentiometer o. dgl. dienen. Falls die Leistungselektronik 10 auf dem Träger 6 befindlich ist, kann der Stecker 23 auch am Träger 6 angeordnet sein. Am Sockel 5 und/oder am Träger 6 kann noch ein nicht weiter gezeigtes Drehpotentiometer als Stellglied für die Leistungselektronik 10 angeordnet sein. Der Leistungsstellring 3 kann beispielsweise auf der Seite des Handgriffs des Elektrowerkzeugs eine Anschlußmöglichkeit aufweisen, mittels welcher das Potentiometer mechanisch und elektrisch kontaktiert werden kann.

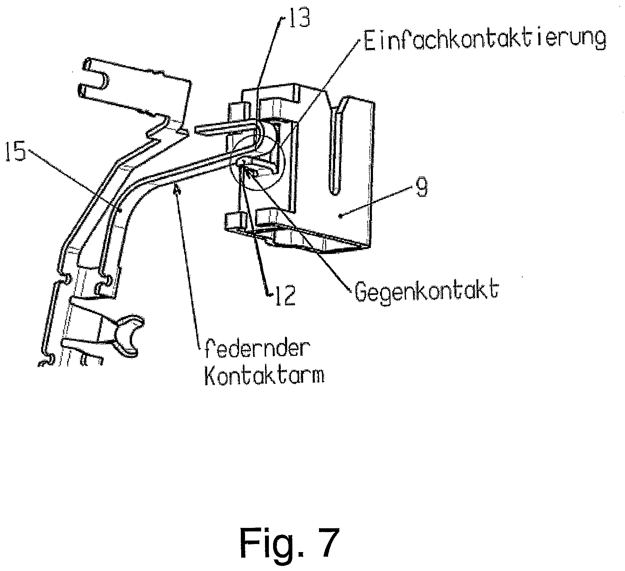

Die nähere Ausgestaltung der Kontaktanordnung 12, 13 ist in Fig. 5 und Fig. 6 sowie in einer weiteren Ausführung in Fig. 7 zu sehen. Der Festkontakt 13 gemäß Fig. 7 ist als ein länglicher federnder Kontaktarm 15 ausgebildet. Der Schaltkontakt 12 ist als seitlicher, abstehender und im wesentlichen nichtfedernder Kontaktflügel am Bürstenhalter 9 ausgebildet. Der Kontaktarm 15 wirkt mit dem Schaltkontakt 12 als Gegenkontakt schaltend in einer Einfachkontaktierung zusammen.

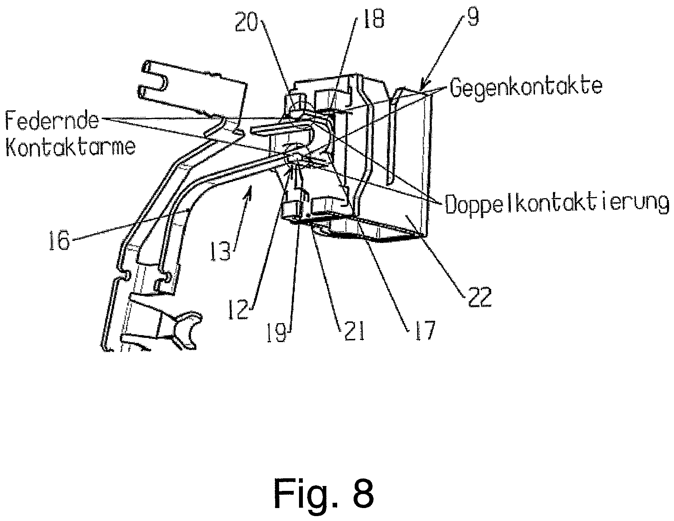

Die nähere Ausgestaltung der Kontaktanordnung 12, 13 ist in noch einer weiteren Ausführung in Fig. 8 zu sehen. Dort besteht der Festkontakt 13 aus einer Kontaktbahn 16 mit einem U-förmig gebogenen Kontaktarm 17, 18. Am Bürstenhalter 9 sind zwei Gegenkontakte 19, 20 als Schaltkontakte 12 angeordnet, derart daß der Festkontakt 13 beidseitig gegen die Gegenkontakte 19, 20 eine Kraft in einer Doppelkontaktierung ausübt.

Der Bürstenhalter 9 ist einteilig oder zweiteilig ausgestaltet, und zwar im letzteren Fall bestehend aus einer Grundplatte 21 aus Kupfer und einer Halterung 22 aus Messing. Wie man sieht sind die Kontaktarme 17, 18 des Festkontakts 13 federnd sowie die Gegenkontakte 19, 20 des Schaltkontakts 12 feststehend, also nicht federnd, ausgestaltet. Selbstverständlich können auch umgekehrt die Kontaktarme des Festkontakts 13 feststehend sowie nicht federnd und die Gegenkontakte des Schaltkontakts 12 federnd ausgestaltet sein, was jedoch nicht weiter gezeigt ist. In letzterem Fall dient dann die Grundplatte 21 als federndes Element für die Gegenkontakte 19, 20. Desweiteren kann, was ebenfalls nicht weiter gezeigt ist, der Festkontakt 13 in der Art einer Kontaktbahn derart gebogen sein, daß zwei federnde Kontaktarme 17, 18 von außen her statt wie in Fig. 8 von innen her gegen die beiden Gegenkontakte 19, 20 eine Kraft ausüben.

Es können in an sich bekannter Art längliche Kontaktnieten mit den als Keilflächen ausgestalteten Kontaktarmen 17, 18 des Festkontakts 13 zusammenwirken. Diese Ausgestaltung unterstützt das Schalten unter Strom. Die Kontaktnieten sind am Gegenkontakt 19, 20 angebracht. Schließlich können die Kontakte der Kontaktanordnung 12, 13 beispielsweise mit einem Edelmetall beschichtet sein.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann der erfindungsgemäße Leistungsstellring 3 nicht nur für Elektrowerkzeuge sondern auch für weitere Elektrogeräte mit mechanischer oder elektronischer Drehrichtungsumkehr Verwendung finden.

Desweiteren kann der Stellring 3 auch die Funktion eines Drehpotentiometers aufweisen und so beispielsweise bei einem Polierer in Winkelschleifer-Bauform mit einer "Gasgebe"-Funktion eingesetzt werden.

### Bezugszeichen-Liste:

- 1:: Schalter (nach Stand der Technik)
- 2:: Elektromotor
- 3:: Stellring (für Elektrowerkzeug nach der Erfindung) / Leistungsstellring / Vorrichtung zur Verstellung der Kohlebürsten
- 4:: Schalter (für Elektrowerkzeug nach der Erfindung)
- 5:: Sockel
- 6:: Träger
- 7:: Kohlebürste
- 8:: Betätigungsnocken
- 9:: Bürstenhalter
- 10:: Leistungselektronik
- 11:: Leiterplatte
- 12:: Schaltkontakt / Kontaktanordnung
- 13:: Festkontakt / Kontaktanordnung
- 14:: Leistungshalbleiter
- 15:: Kontaktarm
- 16:: Kontaktbahn
- 17,18:: Kontaktarm
- 19,20:: Gegenkontakt
- 21:: Grundplatte (von Bürstenhalter)
- 22:: Halterung (von Bürstenhalter)
- 23:: Stecker

## Patentansprüche

1. Vorrichtung zur Drehrichtungsumkehr und/oder zur Verstellung der Kohlebürsten für einen reversiblen Elektromotor für ein Elektrohandwerkzeug mit einem Sockel (5) und mit einem verschwenkbar am Sockel (5) gelagerten Träger (6), wobei Schaltkontakte (12) für die Drehrichtungsumkehr des Elektromotors und/oder Bürstenhalter (9) für die auf dem Kollektor des Elektromotors schleifenden Kohlebürsten (7) angeordnet sind, und wobei der Elektromotor mittels einer Leistungselektronik (10), wie einer Pulsweitensteuerung, einer Phasenanschnittsteuerung, einer Phasenabschnittsteuerung o. dgl., ansteuerbar ist, **dadurch gekennzeichnet, daß** die gesamte Leistungselektronik (10) und eine Sensoren, wie Stromsensoren und/oder Sensoren für die Rotorposition des Elektromotors, aufweisende Signalverarbeitungselektronik am Sockel (5) und/oder am Träger (6) angeordnet ist.

2. Vorrichtung nach Anspruch 1, **dadurch gekennzeichnet, daß** die Schaltkontakte (12) in der Art von Kontaktflügeln ausgestaltet sind, daß vorzugsweise die Schaltkontakte (12) an den Bürstenhaltern (9), die mit den Kohlebürsten (7) in elektrischer Verbindung stehen, befindlich sind, daß weiter vorzugsweise Festkontakte (13), die mit den Feldwicklungen des Elektromotors in elektrischer Verbindung stehen, am Sockel (5) angeordnet sind, und daß noch weiter vorzugsweise die Festkontakte (13) mit den Schaltkontakten (12) als Gegenkontakte in einer wechselweisen Kontaktierung der Kohlebürsten (7) zur Drehrichtungsumkehr des Elektromotors bei Verschwenkung des Trägers (6) zusammenwirken.

3. Vorrichtung nach Anspruch 1 oder 2, **dadurch gekennzeichnet, daß** die Leistungselektronik (10) wenigstens einen Leistungshalbleiter (14), welcher die Ströme in den Motorwindungen des Elektromotors schaltet, beispielsweise einen Triac, einen Thyristor, einen MosFET, eine Leistungsdiode, eine H-Brücke o. dgl., aufweist, und daß vorzugsweise die Signalverarbeitungselektronik und/oder die Leistungselektronik (10) gekapselt, vergossen o. dgl. ist.

4. Vorrichtung nach Anspruch 1, 2 oder 3, **dadurch gekennzeichnet, daß** der Sockel (5) und/oder der Träger (6) Elemente des Elektromotors umfaßt, insbesondere eine Lagerschale für ein Kugellager der Rotorwelle des Elektromotors, und daß vorzugsweise der Sockel (5) und/oder der Träger (6) ein Teil des Gehäuses oder der tragenden Struktur des Elektrohandwerkzeugs bildet.

5. Vorrichtung nach einem der Ansprüche 1 bis 4, **dadurch gekennzeichnet, daß** Leitflossen zur Führung eines, insbesondere für die Kühlung des Elektromotors dienenden Kühlluftstroms am Sockel (5) und/oder am Träger (6) angeordnet sind, derart daß der Kühlluftstrom die Leistungselektronik (10) kühlt, daß vorzugsweise ein Kühlkörper am Sockel (5) und/oder am Träger (6) zur Kühlung der Leistungselektronik (10), insbesondere in thermischer Verbindung zum Leistungshalbleiter (14), angeordnet ist, und daß weiter vorzugsweise die metallischen Teile der Bürstenhalter (9) für die Kohlebürsten (7) als Wärme leitende und/oder Wärme an die Luft abgebende Teile ausgebildet sind.

6. Vorrichtung nach einem der Ansprüche 1 bis 5, **dadurch gekennzeichnet, daß** die tragende Struktur des Sockels (5) und/oder des Trägers (6) aus Metall besteht, derart daß die tragende Struktur gleichzeitig der Wärmespreizung, der Wärmeleitung, der Wärmeabgabe o. dgl. an die Luft und/oder ein anderes Fluid dient, daß vorzugsweise der Sockel (5) und/oder der Träger (6) räumlich derart strukturiert ist, daß eine Abschirmung zur Verbesserung der EMV und/oder die Verhinderung eines Wärmeflusses von den Kohlebürsten (7) auf die wärmeempfindlichen Teile, beispielsweise der Leistungselektronik (10), ermöglicht ist, daß weiter vorzugsweise ein Lüfter zur Erzeugung eines Kühlluftstroms am Sockel (5) und/oder am Träger (6) zur Kühlung der Leistungselektronik (10) angeordnet ist, und daß noch weiter vorzugsweise die Lüfterleistung gesteuert und/oder geregelt ist.

7. Vorrichtung nach einem der Ansprüche 1 bis 6, **dadurch gekennzeichnet, daß** am Sockel (5) und/oder am Träger (6) ein Stecker (23) für den Netzanschluß, für den Anschluß zur Leistungselektronik (23), für den mechanisch und/oder elektrisch kontaktierenden Anschluß zu einem Stellelement mit Potentiometer o. dgl. angeordnet ist.

8. Vorrichtung nach einem der Ansprüche 1 bis 7, **dadurch gekennzeichnet, daß** am Sockel (5) und/oder am Träger (6) ein Drehpotentiometer als Stellglied für die Leistungselektronik (10) angeordnet ist.

9. Vorrichtung nach einem der Ansprüche 1 bis 8, **dadurch gekennzeichnet, daß** Pole der Leistungshalbleiter (14) in der Leistungselektronik (10) direkt auf die Bürstenhalter (9) für die Kohlebürsten (7) elektrisch und/oder wärmetechnisch kontaktieren.

10. Vorrichtung nach einem der Ansprüche 1 bis 9, **dadurch gekennzeichnet, daß** der Festkontakt (13) als U-förmig gebogener Kontaktarm (17, 18) ausgestaltet ist, und daß zwei Gegenkontakte (19, 20) als Schaltkontakte (12) angeordnet sind, derart daß der Festkontakt (13) beidseitig gegen die Gegenkontakte (19, 20) eine Kraft ausübt.

11. Vorrichtung nach Anspruch 10, **dadurch gekennzeichnet, daß** die Kontaktarme (17, 18) des Festkontakts (13) federnd sowie die Gegenkontakte (19, 20) des Schaltkontakts (12) feststehend ausgestaltet sind.

12. Vorrichtung nach Anspruch 10, **dadurch gekennzeichnet, daß** die Kontaktarme (17, 18) des Festkontakts (13) feststehend sowie die Gegenkontakte (19, 20) des Schaltkontakts (12) federnd ausgestaltet sind, insbesondere daß als federndes Element für den Gegenkontakt (19, 20) die Grundplatte (21) dient.

13. Vorrichtung nach Anspruch 10, 11 oder 12, **dadurch gekennzeichnet, daß** der Bürstenhalter (9) zweiteilig ausgestaltet ist, insbesondere bestehend aus einer Grundplatte (21) aus Kupfer und einer Halterung (22) aus Messing.

14. Vorrichtung nach einem der Ansprüche 10 bis 13, **dadurch gekennzeichnet, daß** der Festkontakt (13) in der Art einer Kontaktbahn derart gebogen ist, daß zwei federnde Kontaktarme von außen her gegen die beiden Gegenkontakte (19, 20) eine Kraft ausüben,

15. Vorrichtung nach einem der Ansprüche 10 bis 14, **dadurch gekennzeichnet, daß** längliche Kontaktnieten an den insbesondere als Keilflächen ausgestalteten Kontaktarmen (17, 18) des Festkontakts (13) angebracht sind, daß vorzugsweise der Gegenkontakt (19, 20) mit Kontaktnieten versehen ist, und daß weiter vorzugsweise die Kontakte (12, 13) beschichtet sind, beispielsweise mit einem Edelmetall.

## Claims

1. A device for reversing the direction of rotation and/or for adjusting the carbon brushes for a reversible electric motor for an electric hand tool, having a socket (5) and having a carrier (6) pivotally supported at the socket (5), wherein switch contacts (12) for reversing the direction of rotation of the electric motor and/or brush holders (9) for the carbon brushes (7) slipping on the collector of the electric motor are arranged, and wherein the electric motor is actuated by means of power electronics (10), such as a pulse-width controller, a phase controlled modulator, a phase segment modulator, or the like, **characterised in that** the entire power electronics (10) and a sensor, such as a current sensor and/or a position sensor for the rotor of the electric motor, comprising signal processing electronics, is arranged at the socket (5) and/or at the carrier (6).

2. The device according to Claim 1, **characterised in that** the switch contacts (12) are designed in the manner of contact blades, **in that** preferably the switch contacts (12) are located on the brush holders (9), which are electrically connected to the carbon brushes (7), **in that** more preferably fixed contacts (13), which are electrically connected to the field windings of the electric motor, are arranged at the socket (5), and **in that** yet more preferably the fixed contacts (13) interact with the switch contacts (12) as mating contacts in an alternating contact of the carbon brushes (7) for reversing the direction of rotation of the electric motor when the carrier (6) is pivoted.

3. The device according to Claim 1 or 2, **characterised in that** the power electronics (10) comprise at least one power semiconductor (14), which switches the current in the motor windings of the electric motor, for example a triac, a thyristor, a MOSFET, a power diode, an H-bridge or the like, and **in that** the signal processing electronics and/or the power electronics (10) are encapsulated, moulded or the like.

4. The device according to Claim 1, 2 or 3, **characterised in that** the socket (5) and/or the carrier (6) comprise elements of the electric motor, in particular a bearing shell for a ball bearing of the rotor shaft of the electric motor, and **in that** preferably the socket (5) and the carrier (6) form part of the housing or of the supporting structure of the electric hand tool.

5. The device according to any one of Claims 1 to 4, **characterised in that** guide fins for guiding a cooling air flow, in particular for cooling the electric motor, are arranged at the socket (5) and/or at the carrier (6), in such a way that the cooling air flow cools the power electronics (10), **in that** a heat sink is preferably arranged at the socket (5) and/or at the carrier (6), in particular in thermal connection with the power semiconductor (14), in order to cool the power electronics (10) and **in that** more preferably the metal parts of the brush holders (9) for the carbon brushes (7) are designed as heat conducting parts or parts that discharge heat to the air.

6. The device according to any one of Claims 1 to 5, **characterised in that** the carrying structure of the socket (5) and/or of the carrier (6) is made of metal, in such a way that the carrying structure simultaneously provides heat distribution, heat conduction, heat dissipation or the like to the air and/or to another fluid, **in that** the socket (5) and/or the carrier (6) is preferably spatially structured in such a way as to enable shielding for improving the EMC and/or the preventing a heat flow from the carbon brushes (7) to the heat sensitive parts, for example the power electronics (10), **in that** more preferably a fan for creating a cooling air flow is arranged at the socket (5) and/or at the carrier (6) in order to cool the power electronics (10), and **in that** yet more preferably the fan power is controlled and/or regulated.

7. The device according to any one of Claims 1 to 6, **characterised in that** a plug (23) for the power connection, for the connection to the power electronics (23), for the mechanically and/or electrically contacting connection to an actuator element with potentiometer or the like is arranged at the socket (5) and/or at the carrier (6).

8. The device according to any one of Claims 1 to 7, **characterised in that** a rotary potentiometer is arranged at the socket (5) and/or at the carrier (6), as an actuator for the power electronics (10).

9. The device according to any one of Claims 1 to 8, **characterised in that** the pole of the power semiconductor (14) in the power electronics (10) makes direct electrical and/or thermal contact on the brush holder (9) for the carbon brushes (7).

10. The device according to any one of Claims 1 to 9, **characterised in that** the fixed contact (13) is designed as a U-shaped bent contact arm (17, 18) and **in that** two mating contacts (19, 20) can be arranged as switching contacts (12), such that the fixed contact (13) exerts a force against the mating contacts (19, 20) on both sides.

11. The device according to Claim 10, **characterised in that** the contact arms (17, 18) of the fixed contact (13) are designed to be resilient and the mating contact (19, 20) of the switching contact (12) is designed to be fixed.

12. The device according to Claim 10, **characterised in that** the contact arms (17, 18) of the fixed contact (13) are designed to be fixed and the mating contacts (19, 20) of the switching contact (12) are designed to be resilient, in particular **in that** the base plate (21) serves as the resilient element for the mating contact (19, 20).

13. The device according to Claim 10, 11 or 12, **characterised in that** the brush holder (9) is designed in two parts, consisting in particular of a base plate (21) made of copper and a bracket (22) made of brass.

14. The device according to any one of Claims 10 to 13, **characterised in that** the fixed contact (13) is bent in the form of a contact rail such that two resilient contact arms exert a force from the outside against the two mating contacts (19, 20).

15. The device according to any one of Claims 10 to 14, **characterised in that** longitudinal contact rivets are attached on the contact arms (17, 18) of the fixed contact (13) designed in particular as wedge shapes surfaces, **in that** the mating contact (19, 20) is preferably provided with contact rivets, and **in that** the contacts (12, 13) are preferably coated, for example with a noble metal.

## Revendications

1. Dispositif d'inversion du sens de rotation et/ou de réglage des balais de carbone pour un moteur électrique réversible pour un outil électroportatif, comprenant un socle (5) et un support (6) qui est posé sur le socle (5) de manière à pouvoir pivoter, dans lequel des contacts de commutation (12) pour l'inversion de sens de rotation du moteur électrique et/ou des porte-balais (9) pour pour les balais de carbone (7) frottant sur le collecteur du moteur électrique, sont prévus et dans lequel le moteur électrique peut être commandé, au moyen d'un système électronique de puissance (10), comme une commande de largeur d'impulsion, une commande par redressement à l'entrée des phases ou à la sortie des phases ou une commande similaire, **caractérisé en ce que** l'ensemble du système électronique de puissance (10) et un système électronique de traitement de signal présentant des capteurs, comme des capteurs de courant et/ou des capteurs de la position du rotor du moteur électrique sont disposés sur le socle (5) et/ou sur le support (6).

2. Dispositif selon la revendication 1, **caractérisé en ce que** les contacts de commutation (12) sont conçus sous la forme d'ailes de contact, **en ce que**, de préférence, les contacts de commutation (12) se trouvent sur les porte-balais (9), qui sont en contact électrique avec les balais de carbone (7), **en ce que**, de préférence encore, des contacts fixes (13), qui sont en contact électrique avec les enroulements inducteurs du moteur électrique, sont disposés sur le socle (5) et **en ce que**, de préférence encore, les contact fixes (13) coopèrent avec les contacts de commutation (12) en guise de contacts complémentaires, dans une mise en contact alternée des balais de carbone (7) pour l'inversion du sens de rotation du moteur électrique, lors du pivotement du support (6).

3. Dispositif selon la revendication 1 ou 2, **caractérisé en ce que** le système électronique de puissance (10) présente au moins un semi-conducteur de puissance (14), qui commute les courants dans les enroulements du moteur électrique, par exemple un triac, un thyristor, un MosFET, une diode de puissance, un pont en H ou similaire et **en ce que**, de préférence, le système électronique de traitement de signal et/ou le système électronique de puissance (10) sont encapsulés, coulés ou similaire.

4. Dispositif selon la revendication 1, 2 ou 3, **caractérisé en ce que** le socle (5) et/ou le support (6) comprennent des éléments du moteur électronique, notamment un coussinet de palier pour un roulement de l'arbre de rotor du moteur électrique et **en ce que**, de préférence, le socle (5) et/ou le support (6) forme une partie du boîtier ou de la structure porteuse de l'outil électroportatif.

5. Dispositif selon une des revendications 1 à 4, **caractérisé en ce que** des ailettes conductrices pour le guidage d'un courant d'air froid, servant notamment pour le refroidissement du moteur électrique, sont disposées sur le socle (5) et/ou sur le support (6), de sorte que le courant d'air froid refroidisse le système électronique de puissance (10), **en ce que**, de préférence, un dissipateur thermique est disposé sur le socle (5) et/ou sur le support (6) pour le refroidissement du système électronique de puissance (10), notamment en liaison thermique avec le semi-conducteur de puissance (14) et **en ce que**, de préférence encore, les pièces métalliques des porte-balais (9) pour les balais de carbone (7) sont conçues comme des pièces transmettant la chaleur et/ou diffusant la chaleur dans l'air.

6. Dispositif selon une des revendications 1 à 5, **caractérisé en ce que** la structure porteuse du socle (5) et/ou du support (6) est constituée de métal, de sorte que la structure porteuse serve en même temps à la dispersion thermique, à la conduction thermique, à la dissipation thermique ou analogue vers l'air et/ou un autre fluide, **en ce que**, de préférence, le socle (5) et/ou le support (6) est structuré dans l'espace de sorte qu'un blindage soit possible pour l'amélioration de l'EMV et/ou pour éviter un flux de chaleur depuis les balais de carbone (7) vers les parties sensibles à la chaleur, par exemple le système électronique de puissance (10), **en ce que**, de préférence encore, un ventilateur est disposé pour la production d'un courant d'air froid sur le socle (5) et/ou sur le support (6) pour le refroidissement du système électronique de puissance (10) et **en ce que**, de préférence encore, la puissance du ventilateur est commandée et/ou régulée.

7. Dispositif selon une des revendications 1 à 6, **caractérisé en ce que**, sur le socle (5) et/ou sur le support (6), un connecteur (23) est disposé pour le raccordement au réseau, pour le raccordement au système électronique de puissance (23), pour le raccordement par contact mécanique et/ou électrique à un élément de réglage avec un potentiomètre ou similaire.

8. Dispositif selon une des revendications 1 à 7, **caractérisé en ce que**, sur le socle (5) et/ou sur le support (6), un potentiomètre rotatif est disposé en guise d'actionneur pour le système électronique de puissance (10).

9. Dispositif selon une des revendications 1 à 8, **caractérisé en ce que** les pôles du semi-conducteur de puissance (14) dans le système électronique de puissance (10) sont directement en contact électrique ou thermique sur les porte-balais (9) pour les balais de carbone (7)

10. Dispositif selon une des revendications 1 à 9, **caractérisé en ce que** le contact fixe (13) est conçu comme un bras de contact (17, 18) courbé en forme de U et **en ce que** deux contacts complémentaires (19, 20) sont disposés comme contacts de commutation (12), de sorte que le contact fixe (13) exerce une force contre les contacts complémentaires (19, 20) des deux côtés.

11. Dispositif selon la revendication 10, **caractérisé en ce que** les bras de contact (17, 18) du contact fixe (13) sont conçus élastiques et les contacts complémentaires (19, 20) du contact de commutation (12) sont conçus fixes.

12. Dispositif selon la revendication 10, **caractérisé en ce que** les bras de contact (17, 18) du contact fixe (13) sont conçus fixes et les contacts complémentaires (19, 20) du contact de commutation (12) sont conçus élastiques, en particulier **en ce que** la plaque de base (21) sert d'élément élastique pour le contact complémentaire (19, 20).

13. Dispositif selon la revendication 10, 11 ou 12, **caractérisé en ce que** le porte-balai (9) est conçu en deux pièces, notamment constitué d'une plaque de base (21) en cuivre et d'un support (22) en laiton.

14. Dispositif selon une des revendications 10 à 13, **caractérisé en ce que** le contact fixe (13) est courbé sous la forme d'une piste de contact, de sorte que deux bras de contact élastiques exercent une force depuis l'extérieur contre les deux contacts complémentaires (19, 20).

15. Dispositif selon une des revendications 10 à 14, **caractérisé en ce que** des rivets de contact longitudinaux sont appliqués sur les bras de contact (17, 18) conçus notamment sous forme de surfaces de calage du contact fixe (13), **en ce que**, de préférence, le contact complémentaire (19, 20) est doté de rivets de contact et **en ce que**, de préférence encore, les contacts (12, 13) sont revêtus, par exemple avec un métal noble.
